# EUROPÄISCHE PATENTSCHRIFT

(11) **EP 3 465 076 B1**
(45) Veröffentlichungstag und Bekanntmachung des Hinweises auf die Patenterteilung: **01.07.2020**
(21) Anmeldenummer: 17726254.0
(22) Anmeldetag: 23.05.2017
(51) Int. Cl.: G01B 11/00, G01B 11/24, G06T 7/579

(54) **VORRICHTUNG ZUR VERMESSUNG VON OBJEKTEN**
DEVICE FOR MEASURING OBJECTS
DISPOSITIF DE MESURE D'OBJETS

(30) Priorität: 30.05.2016 DE 102016109919
(43) Veröffentlichungstag der Anmeldung: 10.04.2019
(73) Patentinhaber: Carl Zeiss AG, 73447 Oberkochen (DE)
(72) Erfinder: HÖLLER, Frank, 73434 Aalen (DE); GRAF VOM HAGEN, Christoph-Hilmar, 40591 Düsseldorf (DE)
(74) Vertreter: Sticht, Andreas
(86) Internationale Anmeldenummer: PCT/EP2017/062445
(87) Internationale Veröffentlichungsnummer: WO 2017/207364

(56) Entgegenhaltungen:
- EP-A1- 2 023 077
- EP-A1- 2 896 931
- US-A1- 2015 269 792
- BIRUK A GEBRE ET AL: "Remotely Operated and Autonomous Mapping System (ROAMS)", TECHNOLOGIES FOR PRACTICAL ROBOT APPLICATIONS, 2009. TEPRA 2009. IEEE INTERNATIONAL CONFERENCE ON, IEEE, PISCATAWAY, NJ, USA, 9. November 2009 (2009-11-09), Seiten 173-178, XP031570394, ISBN: 978-1-4244-4991-0

## Beschreibung

Die vorliegende Anmeldung betrifft eine Vorrichtung zum Vermessen von Objekten, welche insbesondere in der industriellen Fertigung von Objekten wie beispielsweise Kraftfahrzeugen oder Flugzeugen oder zur Vermessung industrieller Einrichtungen einsetzbar ist, jedoch nicht hierauf beschränkt ist.

In der Industrie sind verschiedene Vorrichtungen zum Vermessen von Objekten, beispielsweise von industriell gefertigten Produkten, bekannt. Derartige Vorrichtungen können beispielsweise zur Endkontrolle eines hergestellten Produktes oder auch zur Kontrolle während der Fertigung dienen.

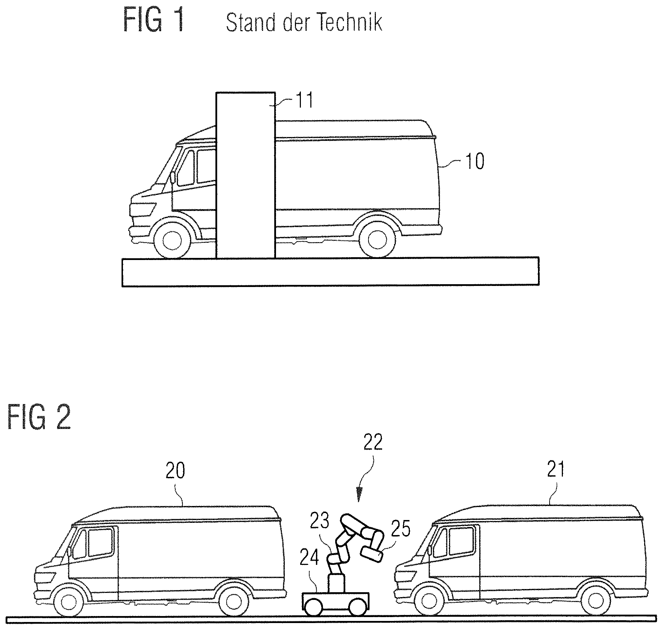

Ein Beispiel für derartige Vorrichtungen sind Koordinatenmessgeräte. Derartige Koordinatenmessgeräte umfassen üblicherweise ein Messkopfsystem mit einem Sensor sowie ein Verfahr- bzw. Positioniersystem, mit welchem der Messkopf an einem zu vermessenden Objekt entlang bewegt werden kann. Derartige herkömmliche Koordinatenmessgeräte sind stationär und erfordern, dass das Koordinatenmessgerät größer als das zu vermessende Objekt ist. Zudem muss das zu vermessende Objekt zu dem Koordinatenmessgerät gebracht werden. Zur Veranschaulichung ist hier in Fig. 1 ein Beispiel gezeigt, in welchem ein Kraftfahrzeug 10 durch ein solches herkömmliches Koordinatenmessgerät 11 gefahren wird.

Eine weitere herkömmliche Herangehensweise sind lasertrackerbasierte Verfahren zur Vermessung großer Objekte, wie sie in der Flugzeugindustrie eingesetzt werden. Diese ermöglichen eine relative hohe Genauigkeit bei der Vermessung, sind jedoch langsam und nicht oder nur relative schwer automatisierbar. Zudem erfordern sie gut geschultes Personal und freie Sicht zwischen einem Sensor und einer Basisstation, was in einer industriellen Umgebung und insbesondere an Robotern nur schwer zu realisieren ist. Entsprechende Vorrichtungen sind kommerziell erhältlich.

Als transportable Messsystem sind artikulierte Messarme bekannt. Ein derartiges Messsystem mit einem artikulierten Messarm ist beispielsweise in der DE 196 37 54 A1 offenbart. Derartige Messarme sind vergleichsweise einfach und intuitiv handhabbar. Eine Automatisierung ist üblicherweise jedoch nicht vorhanden, was der Wiederholbarkeit von Messprozessen entgegensteht. Handgeführte artikulierte Messarme sind zudem im Messvolumen durch die Armlänge des Messarms begrenzt.

US2015/0269792 offenbart eine Vorrichtung zur Vermessung von Objekten mittels eines 3D Scanners mit einer mobilen Basis und einer daran angebrachten Kinematik wobei der 3D Scanner entlang des Messobjekts geführt wird. EP2023077 offenbart eine Vorrichtung zur Vermessung von Objekten mittels eines 3D Scanners wobei dessen Pose durch ein Referenzlasermesssystem bestimmt wird.

Die Publikation "Remotely Operated and Autonomous Mapping System (ROAMS)," von B. A. Gebre et al. (IEEE International Conference on Technologies for Practical Robot Applications, Woburn, MA, 2009, pp. 173-178) offenbart eine Vorrichtung zur Vermessung von Objekten mittels eines 3D Scanners mit einer mobilen Basis und einer daran angebrachten Kinematik wobei der 3D Scanner entlang des Messobjekts auf Grundlage von GPS und eines Gyroskops geführt wird.

Zudem werden Roboter mit Kalibrierverfahren und modellgestützter Korrektur einer Roboterpose (d.h. momentane Positionierung und Ausrichtung des Roboters) eingesetzt. Bei derartigen Robotern sind in der Regel Genauigkeiten unterhalb eines Millimeters nur in Form von Reproduzierbarkeit von Messung zu Messung, aber nicht als absolute Positionierung erreichbar. Somit sind solche Systeme kaum für flexible Messaufgaben einsetzbar.

Es ist daher eine Aufgabe der vorliegenden Erfindung, eine Vorrichtung zur Vermessung von Objekten bereitzustellen, welche in Bezug auf eine autonome Arbeitsweise, Mobilität und/oder Automatisierungsmöglichkeit gegenüber den herkömmlichen Vorrichtungen verbessert ist. Zudem ist es eine Aufgabe, entsprechende Verfahren und Computerprogramme bereitzustellen.

Diesbezüglich wird eine Vorrichtung nach Anspruch 1, ein Verfahren nach Anspruch 11 sowie ein Computerprogramm zur Steuerung einer derartigen Vorrichtung nach Anspruch 15 bereitgestellt. Die Unteransprüche definieren weitere Ausführungsformen.

Gemäß einem ersten Aspekt wird eine Vorrichtung zur Vermessung von Objekten gemäß Anspruch 1 bereitgestellt.

Durch die Bereitstellung einer fahrbaren Basis ist eine hohe Flexibilität hinsichtlich des Einsatzortes beispielsweise in Fabriken möglich.

Die mobile Basis kann Räder aufweisen oder eine schienengebundene mobile Basis sein. Damit ist eine Bewegung auch durch größere Raumbereiche möglich.

Die Vorrichtung kann weiter eine Navigationseinrichtung zum Navigieren der mobilen Basis durch den Raumbereich umfassen. So kann die Vorrichtung autonom verschiedene zu vermessende Objekte anfahren.

Die Navigationseinrichtung kann ein differentielles GPS-System und/oder eine Kameraeinrichtung umfassen. So ist eine genaue Navigation und/oder ein Erkennen von zu vermessenden Objekten möglich.

Die Vorrichtung umfasst weiter eine Steuerung und mindestens einen Sensor, wobei die Steuerung eingerichtet ist, die Kinematik auf Basis von Daten des mindestens einen Sensors zur Bewegung des Messkopfes entlang des Objekts zu steuern. So kann die Kinematik genau gesteuert werden.

Der mindestens eine Sensor umfasst einen ersten Sensor eines ersten Typs und einen zweiten Sensor eines vom ersten Typ verschiedenen zweiten Typs, wobei die Steuerung eingerichtet sein kann, eine Pose des Messkopfes auf Basis einer Kombination von Daten des ersten Sensors und des zweiten Sensors zu bestimmen. So ist eine erhöhte Genauigkeit bei der Bestimmung der Pose möglich.

Das Kombinieren kann auf Basis eines Bayesian-Algorithmus, z.B. auf Basis einer Kalman-Filterung oder einer erweiterten Kalman-Filterung, erfolgen. So können verschiedene Datenquellen zur Bestimmung der Pose fusioniert werden.

Der mindestens eine Sensor umfasst eine 2D-Kamera oder eine 3D-Kamera.

Der Messkopf kann einen optischen Sensor umfassen.

Der optische Sensor kann insbesondere einen konfokal chromatischen Multispotsensor umfassen.

Gemäß einem zweiten Aspekt wird ein Verfahren bereitgestellt, umfassend Bewegen einer Vorrichtung zur Vermessung von Objekten wie oben beschrieben zu einem zu vermessenden Objekt, und Vermessen des Objekts.

Das Verfahren kann weiter ein Bewegen der Vorrichtung in verschiedene Messpositionen zur Durchführung mehrerer Messungen, und ein Kombinieren der mehreren Messungen zu einer Gesamtmessung umfassen. So können große Raumbereiche und/oder Objekte vermessen werden.

Die Gesamtmessung kann eine 3D-Punktwolke eines interessierenden Bereichs sein. So kann ein 3D-Modell bereitgestellt werden.

Durch eine Zusammenführung in ein einheitliches Koordinatensystem können dabei die gewonnen Daten gemeinsam verarbeitet werden.

Das Kombinieren der mehreren Messungen kann durch Verknüpfung (Fusion) von Daten verschiedener Sensoren vorgenommen werden. So kann eine hohe Genauigkeit erzielt werden.

Die Vorrichtung, insbesondere die Steuerung, ist zur Durchführung des oben beschriebenen Verfahrens eingerichtet.

Gemäß einem dritten Aspekt wird ein Computerprogramm zur Steuerung einer Vorrichtung zur Vermessung von Objekten bereitgestellt, mit einem Programmcode, der, wenn er auf einer Steuerung ausgeführt wird, bewirkt, dass eins der obigen Verfahren durchgeführt wird. So kann durch entsprechende Programmierung das Verfahren implementiert werden. Das Computerprogramm kann z.B. auf einem elektronisch lesbaren Datenträger bereitgestellt sein.

Die Erfindung wird nachfolgend anhand von Ausführungsbeispielen unter Bezugnahme auf die beigefügten Zeichnungen näher erläutert. Es zeigen:
Fig. 1 eine Vorrichtung zur Vermessung von Objekten gemäß dem Stand der Technik,
Fig. 2 eine Vorrichtung zum Vermessen von Objekten gemäß einem Ausführungsbeispiel,
Fig. 3 ein Blockdiagramm einer Vorrichtung zum Vermessen von Objekten gemäß einem Ausführungsbeispiel,
Fig. 4 ein Flussdiagramm eines Verfahrens gemäß einem Ausführungsbeispiel,
Fig. 5 ein Diagramm zur Veranschaulichung eines Datenflusses in einer Vorrichtung und bei einem Verfahren gemäß einem Ausführungsbeispiel, und
Fig. 6 Diagramme zur Veranschaulichung einer Kombination verschiedener Messungen zur Veranschaulichung von Ausführungsbeispielen.

Im Folgenden werden verschiedene Ausführungsbeispiele unter Bezugnahme auf die beigefügten Zeichnungen näher erläutert. Diese Ausführungsbeispiele dienen lediglich der Veranschaulichung und sind nicht als einschränkend auszulegen. Beispielsweise bedeutet eine Beschreibung eines Ausführungsbeispiels mit einer Vielzahl von Komponenten nicht, dass alle diese Komponenten zur Implementierung von Ausführungsbeispielen notwendig sind. Vielmehr können bei anderen Ausführungsbeispielen auch manche Komponenten weggelassen sein und/oder durch alternative Komponenten ersetzt werden. Zusätzlich zu den explizit dargestellten und beschriebenen Komponenten können auch weitere Komponenten, beispielsweise in herkömmlichen Vorrichtungen zur Vermessung von Objekten verwendete Komponenten, bereitgestellt sein.

Merkmale verschiedener Ausführungsbeispiele können miteinander kombiniert werden, sofern nichts anderes angegeben ist. Variationen und Abwandlungen, welche für eines der Ausführungsbeispiele beschrieben werden, können auch auf andere Ausführungsbeispiele angewendet werden.

In Fig. 2 ist ein Ausführungsbeispiel einer Vorrichtung 22 zur Vermessung von Objekten, beispielsweise Kraftfahrzeugen 20, 21, dargestellt. Die Vorrichtung 22 umfasst dabei eine mobile Plattform 24 mit Rädern, Raupenketten, oder anderen Möglichkeiten zur Fortbewegung, und einen Antrieb, sodass die Vorrichtung 22 durch einen oder mehrere Räume oder auch im Freien zu zu vermessenden Objekten 20, 21 fahren kann. Dieses Fahren kann wie später noch erläutert werden wird mittels einer Steuerung autonom durch die Vorrichtung 22 erfolgen.

Des Weiteren weist die Vorrichtung 22 einen Messkopf 25 auf, welcher an einer Kinematik 23, beispielsweise einem Roboterarm, angebracht ist. Mittels der Kinematik 23 kann der Messkopf 25 genau an dem jeweils zu vermessenden Objekt, beispielsweise den Kraftfahrzeugen 20 oder 21, positioniert werden. Die genaue Bestimmung einer Pose des Messkopfes 25 erfolgt dabei als Kombination von Messdaten mehrerer Sensoren, wie später noch näher erläutert werden wird. Unter einer Pose wird dabei die Kombination aus Position (z.B. durch Angabe von x, y und z-Koordinate) und Ausrichtung (z.B. durch Angabe von Winkeln) verstanden. Eine derartige Pose kann bei voller Beweglichkeit des Messkopfes 6 unabhängige Koordinaten umfassen. Mittels des Messkopfes 25, auch als Sensorkopf bezeichnet, wird dann die eigentliche Messung durchgeführt. Hierzu kann der Messkopf 25 beispielsweise einen konfokal chromatischen Multispotsensor (CCMS), eine andere Art von optischem Sensor, einen taktilen Sensor, oder jeden anderen geeigneten Sensor umfassen, um eine gewünschte Messung an dem zu vermessenden Objekt vornehmen zu können.

Statt eines Roboters können auch andere Kinematiken verwendet werden, beispielsweise eine autonome Ständermessmaschine. Während die mobile Plattform hier mit Rädern dargestellt sind, sind auch andere Lösungen wie beispielsweise eine fest eingebaute mobile Plattform, welche auf Schienen fährt möglich. Letzteres ist insbesondere dann eine mögliche Herangehensweise, wenn ein Bereich beispielsweise innerhalb einer Fabrikhalle, in dem die Messungen durchgeführt werden sollen, gut definiert ist, sodass ein Verfahren auf Schienen ebenso möglich ist.

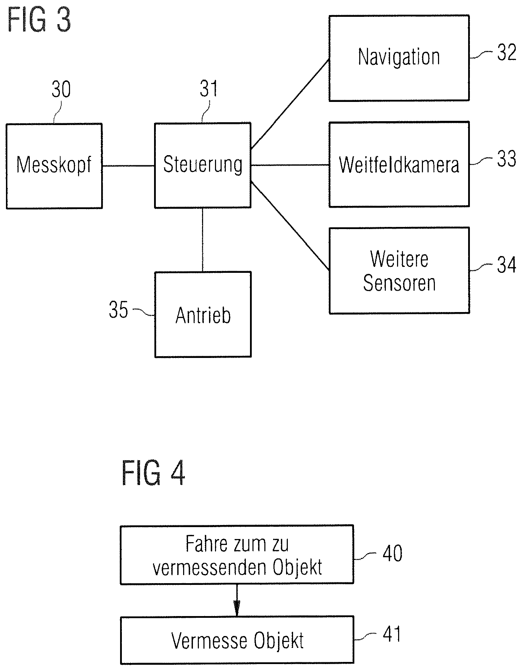

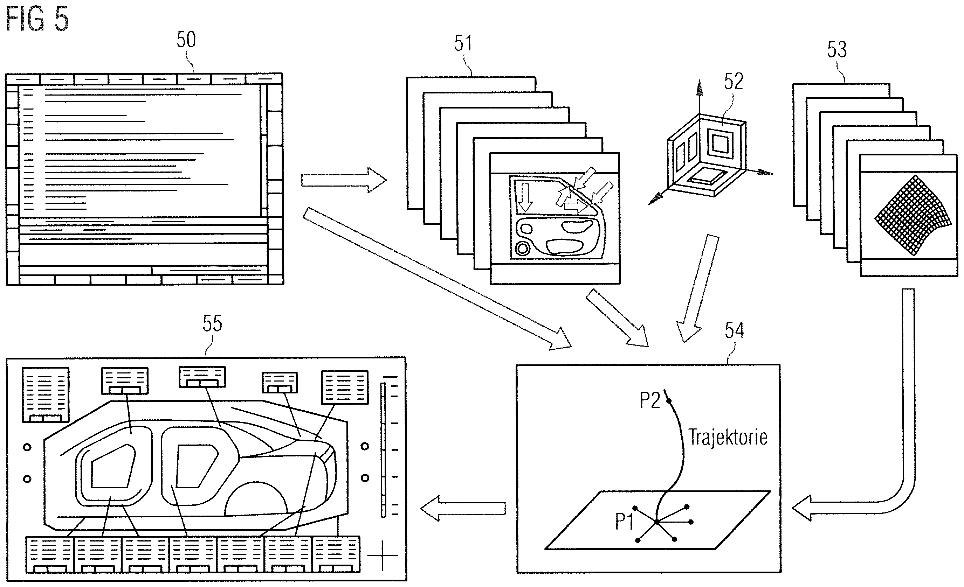

Um dies weiter zu erläutern, zeigt Fig. 3 ein Blockdiagramm, anhand dessen ein Beispiel für einen Aufbau einer Vorrichtung wie der Vorrichtung 22 erläutert wird. Die Funktionsweise der Vorrichtung wird dann nachfolgend unter Bezugnahme auf die Figuren 4 und 5 noch näher erläutert.

Bei dem Ausführungsbeispiel der Fig. 3 umfasst eine Vorrichtung zur Vermessung von Objekten einen Messkopf 30, welcher wie für den Messkopf 25 erklärt einen oder mehrere Sensoren zur Vermessung der gewünschten Objekte umfasst. Die Messung wird durch eine Steuerung 31 gesteuert. Die Steuerung 31 kann hierzu beispielsweise eine oder mehrere Mikrosteuerungen, Mikroprozessoren und dergleichen aufweisen, welche durch ein entsprechenden Computerprogramm programmiert sind, die Vorrichtung zu steuern und nachfolgend noch näher erläuterte Funktionen auszuführen. Auch eine Implementierung durch spezielle Hardware ist möglich. Zu bemerken ist, dass die Steuerung 31 der Vorrichtung nicht vollständig auf der mobilen Plattform 24 implementiert sein muss. Vielmehr kann auch ein Teil der Steuerungsaufgaben, beispielsweise Rechnungen, in einer externen Recheneinrichtung wie einem Computer erfolgen und an eine Steuerungskomponente auf der Plattform über eine geeignete Schnittstelle, beispielsweise eine Funkschnittstelle, übertragen werden.

Des Weiteren umfasst die Vorrichtung der Fig. 3 einen Antrieb 35, welcher beispielsweise benutzt wird, um die mobile Plattform 24 der Fig. 2 zu bewegen. Der Antrieb 35 wird dabei von der Steuerung 31 gesteuert.

Hierzu kann die Vorrichtung über ein Navigationssystem 32 verfügen, beispielsweise ein differentielles GPS-System, eine Navigation auf Basis von Kamerabildern, eine Navigation auf Basis von Sendern, die in einem von der Vorrichtung zu befahrenden Raum verteilt sind, und dergleichen. Mit derartigen Navigationsvorrichtungen ist eine autonome Navigation der Vorrichtung in einem zu befahrenden Raum, beispielsweise in Fabrikräumen, mit einer Genauigkeit kleiner als 0,1 Meter möglich.

Des Weiteren umfasst die Vorrichtung der Fig. 3 eine Weitfeldkamera 33 (oder mehrere Weitfeldkameras) zur Aufnahme von Übersichtsbildern. Die Weitfeldkamera 33 kann dabei auch eine Stereokamera zum Erfassen dreidimensionaler Bilder sein. Diese können für die Navigation 32 benutzt werden, und können zudem dazu benutzt werden, den Messkopf 30 an einer geeigneten Stelle an einem zu vermessenden Objekt zu positionieren. Die Genauigkeit dieser Positionierung des Messkopfs 30 liegt bei Ausführungsbeispielen in einem Bereich kleiner als ein Bildfeld des Messkopfes 30 im Falle eines optischen Sensors. Zudem können weitere Sensoren 34, beispielsweise Beschleunigungssensoren, Winkelsensoren, Kombinationen hiervon, z.B. sogenannte Inertiale Messeinheiten (IMUs, Inertial Measurement Units), Magnetometer, ein Thermometer zur Temperaturkompensation und dergleichen in der Vorrichtung, z.B. an der Kinematik 32, bereitgestellt sein. Als weiterer Sensor kann auch eine musterbasierte Projektionskamera eingesetzt werden, wie sie beispielsweise in Gestenerkennungssystemen eingesetzt wird.

Die Vorgehensweise bei der Vermessung von Objekten wird nunmehr unter Bezugnahme auf die Figuren 4 bis 6 noch näher erläutert. Fig. 4 zeigt ein Flussdiagramm zur Veranschaulichung eines Verfahrens gemäß einem Ausführungsbeispiel. In Schritt 40 fährt die Messvorrichtung mittels der mobilen Plattform 24 zu dem zu vermessenden Objekt. Dies kann wie bereits unter Bezugnahme auf die Fig. 3 erläutert mittels autonomer Navigation unter Benutzung beispielsweise eines differentiellen GPS-Systems und/oder unter Bezugnahme von Kamerabildern und/oder Benutzung von Markierungen oder Signalgebern innerhalb des zu befahrenden Bereichs sein. Hier kann beispielsweise eine Genauigkeit kleiner 0,1 Meter in Fabrikräumen erreicht werden und eine kollisionsfreie Fahrt zu dem zu vermessenden Objekt und ein Auffinden des zu vermessenden Bereichs, beispielsweise Volumens, erzielt werden.

In Schritt 41 wird dann das Objekt vermessen. Unter Vermessung ist dabei nicht nur eine Vermessung der Geometrie zu verstehen, sondern es kann ebenso über das Objekt hinweg eine optische Messung z.B. eines Spektrums durchgeführt werden, aus den Ergebnissen beispielsweise auf Materialdefekte und dergleichen geschlossen werden.

Zur Vermessung wird zunächst eine Navigation an dem zu vermessenden Objekt durchgeführt, um den Messkopf zu positionieren. Hierfür werden 2D-Bilder und/oder 3D-Bilder benutzt, welche beispielsweise mit der Weitfeldkamera 33 der Fig. 3 aufgenommen werden können. Hierdurch kann sichergestellt werden, dass das zu vermessende Objekt optimal in einem Messfeld des Kopfes liegt. Eine Positioniergenauigkeit hier kann im Bereich 1-10 mm liegen und von einer Größe des Bildfeldes oder Vermessungsbereichs des Messkopfes abhängen. Dann folgt eine Vermessung des Objekts, beispielsweise der dreidimensionalen Topographie des Objekts, mit einem geeigneten optischen Sensor wie einem chromatischen Multispotsensor oder anderen geeigneten Sensor. Diese Vermessung kann in Echtzeit erfolgen. Eine Messgenauigkeit kann hier je nach Implementierung des Messkopfes im Bereich von 0,01-0,1 mm liegen.

Um größere Objekte zu vermessen, erfolgt dann eine Navigation des Messkopfes entlang des Objekts zur Generierung einer zusammenhängenden Messung, insbesondere einer zusammenhängenden Punktewolke. Dabei kann die Punktewolke objektreferenziert sein kann, d.h. sich auf ein Koordinatensystem des Objekts beziehen.

Eine derartige Navigation des Messkopfes entlang des Objekts erfolgt insbesondere als differentielle Navigation des Messkopfes und weist bevorzugt eine Genauigkeit kleiner als 0,1 mm auf. Eine derartige differentielle Navigation des Messkopfes am Objekt kann auch bei ortsfesten Vorrichtungen zur Vermessung eingesetzt werden. Diese Genauigkeit ist insbesondere bevorzugt, um bei einer entsprechenden Genauigkeit eines Sensors des Messkopfes das Objekt insgesamt zusammenhängend mit einer entsprechenden Genauigkeit zu vermessen.

Hierzu ist eine möglichst genaue Bestimmung der Position des Messkopfes nötig. Um die Genauigkeit einer derartigen Bestimmung zu erhöhen, können hier Daten mehrerer Sensoren und Modelle kombiniert werden. Insbesondere können Robotermodelle und -befehle, welche die Bewegung einer Kinematik wie der Kinematik 23 beschreiben bzw. steuern, Trajektorienberechnungen des Messkopfes aus Stereobildsequenzen (beispielsweise mit der Weitfeldkamera 33 aufgenommen, wobei hier ein sogenannter "Inverse Structure from Motion"-Algorithmus verwendet werden kann), und/oder zeitliche Daten aus der Vorrichtung 22, beispielsweise Daten von Bewegungssensoren der Vorrichtung wie Beschleunigungssensoren, verknüpft werden.

Je nach Messaufgabe können dann verschiedene Punktewolken oder Messungen, beispielsweise Messungen an verschiedenen Objekten, in ein einheitliches Koordinatensystem überführt werden. Auf diese Weise können beispielsweise Bereiche eines Raumes, beispielsweise einer Fabrikhalle oder mehrere Objekte, komplett vermessen werden. Eine derartige Zusammenführung der Punktewolken kann Trajektoriendaten der Vorrichtung (beispielsweise der Vorrichtung 22) und/oder Trajektoriendaten der Kinematik 23 nutzen. Diese Trajektoriendaten können insbesondere die Pose des Messkopfes über die Zeit beschreiben. Dabei kann eine globale Nachoptimierung durch Nutzung herkömmlicher Stitchingverfahren und/oder Nutzung von Objektvorwissen, d.h. Vorwissen über die zu vermessenden Objekte, erfolgen. Ein derartiges Vorwissen kann beispielsweise ein Vorwissen, dass die Objekte frei von Unstetigkeiten sind, ein Wissen über ein Vorhandensein von Kanten, vorliegende CAD-Daten, welche das Design der Objekte beschreiben und dergleichen umfassen.

Um dies weiter zu veranschaulichen, zeigt die Fig. 5 als Beispiel einen Datenfluss bei Verwendung eines konfokal chromatischen Multispotsensors zusammen mit einer inertialen Messeinheit (IMU vom Englischen "Inertial Measurement Unit"), welche eine räumliche Kombination mehrerer Inertialsensoren wie Beschleunigungssensoren und Winkelsensoren ist, welche in der erfindungsgemäßen Vorrichtung angeordnet sein kann, und einer Stereoweitfeldkamera (beispielsweise der Weitfeldkamera 33).

Zur Steuerung werden zunächst Steuerungsbefehle 50 für die Vorrichtung bereitgestellt, welche die Vorrichtung einschließlich einer Kinematik bewegen und positionieren. Mit 51 ist ein Stereobildstapel bezeichnet, welcher folgend der Positionierung über die Steuerbefehle 50 aufgenommen wird. Ein Bezugszeichen 52 bezeichnet die inertiale Messeinheit und ein Bezugszeichen 53 bezeichnet einen mittels des chromatischen Multispotsensors aufgenommenen Datenstapel. Die Steuerbefehle, die Stereobilddaten 51 und Messdaten von der IMU 52 gehen in einen Algorithmus ein, welcher in Software implementiert sein kann und welcher die verschiedenen Messungen kombiniert (fusioniert), um hieraus eine Trajektorie des Messkopfes (d.h. die Pose des Messkopfes über die Zeit) wie mit 54 bezeichnet zu bestimmen.

Diese Kombination der Daten kann bevorzugt durch einen Bayesian-Algorithmus wie einen Kalman-Filter oder einen erweiterten Kalman-Filter erfolgen.

Auf Basis der Trajektorie können dann die Messungen des Multispotsensors (Messstapel 53) an verschiedenen Orten zu einer einzigen Punktwolke kombiniert werden.

Zu dieser Kombination der Messungen des Multispotsensors kann auch eine merkmalsbasierte Bildauswertung aufgenommener Bilder und Messungen erfolgen, um Übereinstimmungen zu finden und die Messungen so zusammenzusetzen. Es können auch Markierungen zur verbesserten Erkennung von Merkmalen eingesetzt werden, beispielsweise Markierungen welche auf die zu vermessenden Objekte projiziert werden. Dies kann die Zusammensetzung von einzelnen Punktwolken erleichtern.

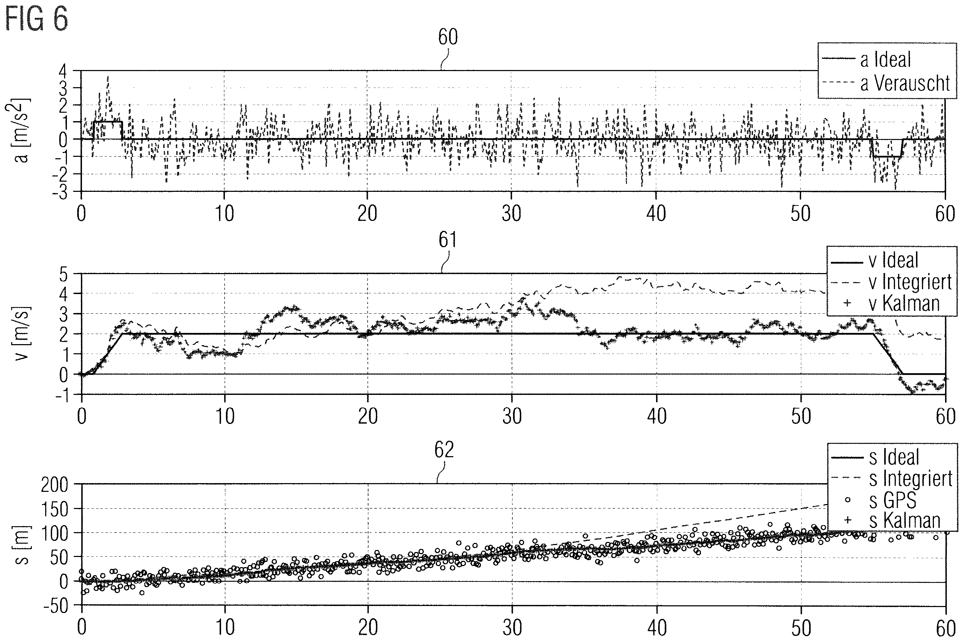

Zur Veranschaulichung der Verbesserung der Messqualität bei verschiedenen Sensoren durch Kombination mittels Kalman-Filterung sind in Fig. 6 Beispielgraphen gezeigt. Ein Diagramm 60 zeigt in einer gestrichelten Kurve Beschleunigungsmesswerte, welche dargestellt mit einem deutlichen Rauschen behaftet sind. Eine blaue Kurve in Graph 60 zeigt ideale Werte ohne Rauschen.

In einem Diagramm 61 zeigt eine gestrichelte Kurve die integrierten (verrauschten) Beschleunigungswerte aus dem Diagramm 60, Kreuze zeigen Werte, welche durch Kalman-Filterung erhalten werden, und eine durchgezogene Linie zeigt ideale Werte. Kreise in Abbildung 62 zeigen Messungen einer Ortsbestimmung, welche vergleichsweise ungenau ist. Durch eine Kalman-Filterung kann auch hier eine deutliche Verbesserung erreicht werden, indem die Beschleunigungsmesswerte mit den Ortsmesswerten kombiniert werden, wie aus den Kreuzen des Diagramms 62 ersichtlich, welche nahe an einer idealen Linie liegen. Die bei auf Integration verrauschter Messwerte typischerweise auftretende Drift, wie sie durch gestrichelte Kurven in dem Diagramm 61 und dem Diagramm 62 symbolisiert werden, wird hierdurch vermieden.

Somit ist am Beispiel der Fig. 6 gezeigt, dass durch Kombination von Messwerten beispielsweise mittels Kalman-Filterung eine deutliche Steigerung der Genauigkeit erreicht werden kann. Hierdurch können letztendlich Positioniergenauigkeiten des Messkopfes von kleiner als 0,1 mm erreicht werden, was bei Ausführungsbeispielen eine hochgenaue Vermessung ermöglicht.

Die angesichts der oben dargestellten Variationen, Abwandlungen und Alternativen ist ersichtlich, dass die dargestellten Ausführungsbeispiele nicht als einschränkend auszulegen sind.

## Patentansprüche

1. Vorrichtung (22) zur Vermessung von Objekten, umfassend:
eine mobile Basis (24) zum Bewegen der Vorrichtung durch einen Raumbereich,
eine an der mobilen Basis (24) angebrachte Kinematik (23),
einen an der Kinematik (23) angebrachten Messkopf (25), wobei die Kinematik (23) eingerichtet ist, den Messkopf (25) relativ zu der mobilen Basis (24) zu bewegen, wobei der Messkopf (25) einen Sensor zum Vermessen von Objekten (20, 21) umfasst,
eine Steuerung (31), und
einen ersten Sensor eines ersten Typs und einen zweiten Sensor eines vom ersten Typ verschiedenen zweiten Typs,
wobei die Steuerung eingerichtet ist, eine Pose des Messkopfes (25; 30) auf Basis einer Kombination von Daten des ersten Sensors und des zweiten Sensors zu bestimmen und die Kinematik auf Basis von Daten des ersten Sensors und des zweiten Sensors zur Bewegung des Messkopfes (25; 30) entlang des Objekts (20, 21) zu steuern, wobei der erste Sensor eine 2D-Kamera oder eine 3D-Kamera umfasst.

2. Vorrichtung nach Anspruch 1, wobei die mobile Basis (24) Räder aufweist oder eine schienengebundene mobile Basis ist.

3. Vorrichtung nach Anspruch 1 oder 2, weiter umfassend eine Navigationseinrichtung (32) zum Navigieren der mobilen Basis (24) durch den Raumbereich.

4. Vorrichtung nach Anspruch 3, wobei die Navigationseinrichtung (32) ein differentielles GPS-System und/oder eine Kameraeinrichtung umfasst.

5. Vorrichtung nach einem der Ansprüche 1-4, wobei die Steuerung eingerichtet ist, die Pose des Messkopfes auf Basis von Steuerdaten der Vorrichtung zu bestimmen.

6. Vorrichtung nach einem der Ansprüche 1-5, wobei das Kombinieren auf Basis eines Bayesian-Algorithmus erfolgt.

7. Vorrichtung nach einem der Ansprüche 1-6, wobei der zweite Sensor ein oder mehrere Sensoren aus der Gruppe bestehend aus einem Magnetfeldsensor, einem Beschleunigungssensor und einem Winkelsensor, umfasst.

8. Vorrichtung nach einem der Ansprüche 1-7, wobei der Messkopf einen optischen Sensor umfasst.

9. Vorrichtung nach Anspruch 8, wobei der optische Sensor einen konfokal chromatischen Multispotsensor umfasst.

10. Vorrichtung nach einem der Ansprüche 1-9, wobei der erste Sensor eine Weitfeldkamera (33) umfasst.

11. Verfahren, umfassend:
Bewegen einer Vorrichtung zur Vermessung von Objekten nach einem der Ansprüche 1-10 zu einem zu vermessenden Objekt, und
Vermessen des Objekts.

12. Verfahren nach Anspruch 11, weiter umfassend Bewegen der Vorrichtung in verschiedene Messpositionen zur Durchführung mehrerer Messungen, und Kombinieren der mehreren Messungen zu einer Gesamtmessung.

13. Verfahren nach Anspruch 12, wobei die Gesamtmessung eine 3D-Punktwolke eines interessierenden Bereichs ist.

14. Verfahren nach Anspruch 12 oder 13, wobei das Kombinieren der mehreren Messungen durch Fusion von Daten verschiedener Sensoren vorgenommen wird.

15. Computerprogramm zur Steuerung einer Vorrichtung zur Vermessung von Objekten, mit einem Programmcode, der, wenn er auf einer Steuerung nach Anspruch 1 ausgeführt wird, bewirkt, dass das Verfahren nach einem der Ansprüche 11-14 durchgeführt wird.

## Claims

1. Apparatus (22) for measuring objects, comprising:
a mobile base (24) for moving the apparatus through a spatial region,
a kinematic unit (23) attached to the mobile base (24),
a measuring head (25) attached to the kinematic unit (23), wherein the kinematic unit (23) is configured to move the measuring head (25) relative to the mobile base (24), wherein the measuring head (25) comprises a sensor for measuring objects (20, 21), a controller (31), and
a first sensor of a first type and a second sensor of a second type that differs from the first type, wherein the controller is configured to determine a pose of the measuring head (25; 30) on the basis of a combination of data of the first sensor and of the second sensor and control the kinematic unit on the basis of data of the first sensor and the second sensor for the purposes of moving the measuring head (25; 30) along the object (20, 21),
wherein the first sensor comprises a 2D camera or a 3D camera.

2. Apparatus according to Claim 1, wherein the mobile base (24) has wheels or said mobile base is a rail-mounted mobile base.

3. Apparatus according to Claim 1 or 2, further comprising a navigation device (32) for navigating the mobile base (24) through the spatial region.

4. Apparatus according to Claim 3, wherein the navigation device (32) comprises a differential GPS system and/or a camera device.

5. Apparatus according to any one of Claims 1-4, wherein the controller is configured to determine the pose of the measuring head on the basis of control data of the apparatus.

6. Apparatus according to any one of Claims 1-5, wherein the combination is implemented on the basis of a Bayesian algorithm.

7. Apparatus according to any one of Claims 1-6, wherein the second sensor comprises one or more sensors of the group consisting of a magnetic field sensor, an acceleration sensor and an angle sensor.

8. Apparatus according to any one of Claims 1-7, wherein the measuring head comprises an optical sensor.

9. Apparatus according to Claim 8, wherein the optical sensor comprises a confocal chromatic multi-spot sensor.

10. Apparatus according to any one of Claims 1-9, wherein the first sensor comprises a wide-field camera (33).

11. Method, comprising:
moving an apparatus for measuring objects according to any one of Claims 1-10 to an object to be measured, and
measuring the object.

12. Method according to Claim 11, further comprising moving the apparatus into different measurement positions for carrying out a plurality of measurements, and
combining the plurality of measurements to form an overall measurement.

13. Method according to Claim 12, wherein the overall measurement is a 3D point cloud of a region of interest.

14. Method according to Claim 12 or 13, wherein combining the plurality of measurements is implemented by fusing data of different sensors.

15. Computer program for controlling an apparatus for measuring objects, having a program code which, when executed on a controller according to Claim 1, causes the method according to any one of Claims 11-14 to be carried out.

## Revendications

1. Arrangement (22) destiné à mesurer des objets, comprenant :
une base mobile (24) destinée à déplacer l'arrangement à travers une zone de l'espace,
un système cinématique (23) monté sur la base mobile (24), une tête de mesure (25) montée sur le système cinématique (23), le système cinématique (23) étant conçu pour déplacer la tête de mesure (25) par rapport à la base mobile (24), la tête de mesure (25) comportant un capteur destiné à mesurer des objets (20, 21),
une commande (31), et
un premier capteur d'un premier type et un deuxième capteur d'un deuxième type, différent du premier type, la commande étant conçue pour déterminer une posture de la tête de mesure (25 ; 30) en se basant sur une combinaison de données du premier capteur et du deuxième capteur et commander le système cinématique sur la base des données du premier capteur et du deuxième capteur en vue de déplacer la tête de mesure (25 ; 30) le long de l'objet (20, 21),
le premier capteur comportant une caméra 2D ou une caméra 3D.

2. Arrangement selon la revendication 1, la base mobile (24) possédant des roues ou une base mobile montée sur rails.

3. Arrangement selon la revendication 1 ou 2, comprenant un dispositif de navigation (32) servant à la navigation de la base mobile (24) à travers la zone de l'espace.

4. Arrangement selon la revendication 3, le dispositif de navigation (32) comprenant un système GPS différentiel et/ou un dispositif à caméra.

5. Arrangement selon l'une des revendications 1 à 4, la commande étant conçue pour déterminer la posture de la tête de mesure sur la base de données de commande de l'arrangement.

6. Arrangement selon l'une des revendications 1 à 5, la combinaison étant effectuée sur la base d'un algorithme bayésien.

7. Arrangement selon l'une des revendications 1 à 6, le deuxième capteur comprenant un ou plusieurs capteurs du groupe composé d'un capteur de champ magnétique, d'un capteur d'accélération et d'un capteur d'angle.

8. Arrangement selon l'une des revendications 1 à 7, la tête de mesure comprenant un capteur optique.

9. Arrangement selon la revendication 8, le capteur optique comprenant un capteur multipoints chromatique confocal.

10. Arrangement selon l'une des revendications 1 à 9, le premier capteur comprenant une caméra à champ large (33) .

11. Procédé comprenant :
le déplacement d'un arrangement destiné à mesurer des objets selon l'une des revendications 1 à 10 vers un objet à mesurer, et
la mesure de l'objet.

12. Procédé selon la revendication 11, comprenant en outre le déplacement de l'arrangement dans différentes positions de mesure en vue de réaliser plusieurs mesures, et la combinaison des plusieurs mesures en une mesure totale.

13. Procédé selon la revendication 12, la mesure totale étant un nuage de points 3D d'une zone d'intérêt.

14. Procédé selon la revendication 12 ou 13, la combinaison des plusieurs mesures étant effectuée par la fusion des données de différents capteurs.

15. Programme informatique destiné à commander un arrangement destiné à mesurer des objets, comprenant un code de programme qui, lorsqu'il est exécuté sur une commande selon la revendication 1, a pour effet que le procédé selon l'une des revendications 11 à 14 est mis en œuvre.
